(19) **Europäisches Patentamt**

**European Patent Office**

**Office européen des brevets**

(11) **EP 1 023 838 B1**

(12) **EUROPÄISCHE PATENTSCHRIFT**

(45) Veröffentlichungstag und Bekanntmachung des Hinweises auf die Patenterteilung:
**10.09.2003 Patentblatt 2003/37**

(51) Int Cl.⁷: **A01N 43/653**, A01N 43/54
// (A01N43/54, 43:653)

(21) Anmeldenummer: **00101764.9**

(22) Anmeldetag: **17.05.1995**

(54) **Mikrobizide**

Microbicide

Microbicide

(84) Benannte Vertragsstaaten:
**AT BE CH DE DK ES FR GB GR IE IT LI LU NL PT SE**

(30) Priorität: **20.05.1994 CH 157694**

(43) Veröffentlichungstag der Anmeldung:
**02.08.2000 Patentblatt 2000/31**

(60) Teilanmeldung:
**03008545.0 / 1 327 388**

(62) Dokumentnummer(n) der früheren Anmeldung(en) nach Art. 76 EPÜ:
**95107520.9 / 0 682 865**

(73) Patentinhaber: **Syngenta Participations AG**
**4058 Basel (CH)**

(72) Erfinder:
• **Zeun, Ronald**
**79395 Neuenburg (DE)**
• **Knauf-Beiter, Gertrude**
**79379 Müllheim (DE)**

(56) Entgegenhaltungen:
**EP-A- 0 548 025          EP-A- 0 556 157**
**DE-A- 4 318 372**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft neue mikrobizide Wirkstoff-Gemische mit synergistisch gesteigerter Wirkung, enthaltend mindestens zwei Wirkstoff-Komponenten, und Verfahren zur Anwendung solcher Gemische im Pflanzenschutz.

EP 0548025 offenbart die Kombination von Cyprodinil mit einem von zehn namentlich genannten Triazolen, von denen jedoch keines Metconazole entspricht.

DE4318372 offenbart die Kombination von Pyrimethanil mit einer einzigen Einzelverbindung, die aus insgesamt elf verschiedenen Verbindungsklassen ausgewählt ist. Zu jeder dieser elf Verbindungsklassen gehören jeweils unterschiedlich viele spezifisch genannte Einzelverbindungen.

Die Komponente I ist eine Verbindung

(IC)  5-(4-Chlorbenzyl)-2,2-dimethyl-1-(1H-1,2,4-triazol-1-ylmethyl)-cyclopentanol ("Metconazol"; Referenz: EP-A-267,778) oder jeweils eines ihrer Salze oder Metallkomplexe;

die Komponente II ist die Verbindung

(IIB) 4-Cyclopropyl-6-methyl-N-phenyl-2-pyrimidinamin ("Cyprodinil"; Referenz: EP-A-310 550) oder jeweils eines ihrer Salze oder Metallkomplexe.

Unter den Säuren, die zur Herstellung von Salzen der Verbindungen der Formeln I und II verwendet werden können, sind zu nennen:

Halogenwasserstoffsäure wie Fluorwasserstoffsäure, Chlorwasserstoffsäure, Bromwasserstoffsäure oder Jodwasserstoffsäure sowie Schwefelsäure, Phosphorsäure, Salpetersäure und organische Säuren wie Essigsäure, Trifluoressigsäure, Trichloressigsäure, Propionsäure, Glycolsäure, Thiocyansäure, Milchsäure, Bernsteinsäure, Zitronensäure, Benzoesäure, Zimtsäure, Oxalsäure, Ameisensäure, Benzolsulfonsäure, p-Toluolsulfonsäure, Methansulfonsäure, Salicylsäure, p-Aminosalicylsäure, 2-Phenoxybenzoesäure, 2-Acetoxybenzoesäure oder 1,2-Naphthalin-disulfonsäure.

Der Begriff Salze schliesst auch Metallkomplexe von basischen Komponenten I und II ein. Diese Komplexe können wahlweise nur eine Komponente oder auch beide Komponenten unabhängig betreffen. Es lassen sich auch Metallkomplexe herstellen, die beide Wirkstoffe I und II miteinander zu einem gemischten Komplex verbinden.

Metallkomplexe bestehen aus dem zugrundeliegenden organischen Molekül und einem anorganischen oder organischen Metallsalz, beispielsweise den Halogeniden, Nitraten, Sulfaten, Phosphaten, Acetaten, Trifluoracetaten, Trichloracetaten, Propionaten, Tartraten, Sulfonaten, Salicylaten, Benzoaten usw. der Elemente der zweiten Hauptgruppe wie Calcium und Magnesium und der dritten und vierten Hauptgruppe wie Aluminium, Zinn oder Blei sowie der ersten bis achten Nebengruppe wie Chrom, Mangan, Eisen, Kobalt, Nickel, Kupfer, Zink usw. Bevorzugt sind die Nebengruppen-Elemente der 4.Periode. Die Metalle können dabei in den verschiedenen ihnen zukommenden Wertigkeiten vorliegen. Die Metallkomplexe können ein- oder mehrkemig auftreten, d.h. sie können ein oder mehrere organische Molekülanteile als Liganden enthalten.

Dem erfindungsgemässen Wirkstoffgemisch kann man auch weitere agrarchemische Aktivsubstanzen wie Insektizide, Akarizide, Nematizide, Herbizide, Wuchsregulatoren und Düngemittel, insbesondere aber weitere Mikrobizide, zufügen.

Es hat sich nun überraschenderweise gezeigt, dass die erfindungsgemässen Mischungen der Komponenten I und II in ihrer fungiziden Wirkung nicht nur additive Wirkung, sondern deutliche synergistisch gesteigerte Wirkung entfalten.

Gegenstand der vorliegenden Erfindung ist auch ein Verfahren zur Bekämpfung von Pilzen, das gekennzeichnet ist durch Behandlung einer durch Pilze befallenen oder gefährdeten Stelle in beliebiger Reihenfolge oder gleichzeitig mit a) einem Wirkstoff der Formell oder einem seiner Salze, und mit b) dem Wirkstoff der Formel II oder einem seiner Salze, wobei die Salze auch so gewählt sein können, dass beide Wirkstoffe an einem Säurerest oder, im Falle eines Metallkomplexes, an ein zentrales Metall-Kation gebunden sind.

Günstige Mischungsverhältnisse der beiden Wirkstoffe sind I:II = 1:10 bis 10:1, bevorzugt I:II = 1:6 bis 6:1, besonders bevorzugt I:II = 1:3 bis 3:1. Weitere günstige Mischungsverhältnisse I:II sind z.B. 1:1, 1:2, 1:4, 2:1, 2:3.

Die erfindungsgemässen Wirkstoffmischungen I+II besitzen sehr vorteilhafte kurative, präventive und systemische Fungizid-Eigenschaften zum Schutz von Pflanzen. Mit den vorliegenden Wirkstoffmischungen können an Pflanzen oder an Pflanzenteilen (Früchte, Blüten, Laubwerk, Stengel, Knollen, Wurzeln) von unterschiedlichen Nutzkulturen die auftretenden Mikroorganismen eingedämmt oder vernichtet werden, wobei auch später zuwachsende Pflanzenteile von derartigen Mikroorganismen verschont bleiben. Sie können auch als Beizmittel zur Behandlung von Pflanzenvermehrungsgut, insbesondere von Saatgut (Früchte, Knollen, Körner) und Pflanzenstecklingen (z.B. Reis) zum Schutz vor Pilzinfektionen sowie gegen im Erdboden auftretende phytopathogene Pilze eingesetzt werden. Die erfindungsgemässen Wirkstoff-Gemische zeichnen sich durch besonders gute Pflanzenverträglichkeit und durch Umweltfreundlichkeit aus.

Die Wirkstoff-Gemische sind gegen die den folgenden Klassen angehörenden phytopathogenen Pilze wirksam: Ascomyceten (z.B. Venturia, Podosphaera, Erysiphe, Monilinia, Uncinula); Basidiomyceten (z.B. die Gattung Hemileia, Rhizoctonia, Puccinia); Fungi imperfecti (z.B. Botrytis, Helminthosporium, Rhynchosporium, Fusarium, Septoria, Cercospora, Alternaria, Pyricularia und Pseudocercosporella herpotri choides); Oomyceten (z.B. Phytophthora, Peronospora, Bremia, Pythium, Plasmopara).

Als Zielkulturen für die hierin offenbarten Indikationsgebiete gelten im Rahmen dieser Erfindung z.B. folgende Pflanzenarten: Getreide: (Weizen, Gerste, Roggen, Hafer, Reis, Sorghum und Verwandte); Rüben: (Zucker- und Futterrüben); Kern-, Stein- und Beeren obst: (Aepfel, Birnen, Pflaumen, Pfirsiche, Mandeln, Kirschen, Erdbeeren, Himbeeren und Brombeeren); Hülsenfrüchte: (Bohnen, Linsen, Erbsen, Soja); Oelkulturen: (Raps, Senf, Mohn, Oliven, Sonnenblumen, Kokos, Rizinus, Kakao, Erdnüsse); Gurkengewächse: (Kürbis, Gurken, Melonen); Fasergewächse: (Baumwolle, Flachs, Hanf, Jute); Citrusfrüchte: (Orangen, Zitronen, Grapefruit, Mandarinen); Gemüsesorten (Spinat, Kopfsalat, Spargel, Kohlarten, Möhren, Zwiebeln, Tomaten, Kartoffeln, Paprika); Lorbeergewächse: (Avocado, Cinnamonum, Kampfer) oder Pflanzen wie Mais, Tabak, Nüsse, Kaffee, Zuckerrohr, Tee, Weinreben, Hopfen, Bananen- und Naturkautschuk gewächse sowie Zierpflanzen (Blumen, Sträucher, Laubbäume und Nadelbäume wie Koniferen). Diese Aufzählung stellt keine Limitierung dar.

Besonders vorteilhaft sind die erfindungsgemässen Wirkstoffgemische für die Anwendungen in Getreide, ganz besonders in Weizen und Gerste.

Die Wirkstoff-Gemische der Formeln I und II werden üblicherweise in Form von Zusammensetzungen verwendet. Die Wirkstoffe der Formelnl und II können gleichzeitig, können aber auch nacheinander am selben Tage auf die zu behandelnde Fläche oder Pflanze gegeben werden, zusammen mit gegebenenfalls weiteren in der Formulierungstechnik üblichen Trägerstoffen, Tensiden oder anderen applikations fördernden Zusätzen.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde- oder Düngemitteln.

Ein bevorzugtes Verfahren zum Aufbringen eines Wirkstoff-Gemisches das mindestens je einen dieser Wirkstoffe I und II enthält, ist das Aufbringen auf die oberirdischen Pflanzenteile, vor allem das Blattwerk (Blattapplikation). Anzahl der Applikationen und Aufwandmenge richten sich nach den biologischen und klimatischen Lebensbedingungen für den Erreger. Die Wirkstoffe können aber auch über den Erdboden durch das Wurzelwerk in die Pflanze gelangen (systemische Wirkung), indem man den Standort der Pflanze mit einer flüssigen Zubereitung tränkt (z.B. im Reisanbau) oder die Substanzen in fester Form in den Boden einbringt z.B. in Form von Granulat (Bodenapplikation). Die Verbindungen der Formeln I und II können auch zur Saatgutbehandlung auf Samenkörner aufgebracht werden (Coating), indem man die Knollen bzw. Körner entweder nacheinander in einer flüssigen Zubereitung eines Wirkstoffs tränkt oder sie mit einer bereits kombinierten feuchten oder trockenen Zubereitung beschichtet. Darüberhinaus sind in besonderen Fällen weitere Applikationsarten bei Pflanzen möglich, z.B. die gezielte Behandlung der Knospen oder der Fruchtstände.

Die Verbindungen der Kombination werden dabei in unveränderter Form oder vorzugsweise zusammen mit den in der Formulierungstechnik üblichen Hilfsmitteln eingesetzt und werden daher z.B. zu Emulsionskonzentraten, streichfähigen Pasten, direkt versprühbaren oder verdünnbaren Lösungen, verdünnten Emulsionen, Spritzpulvem, löslichen Pulvern, Stäubemitteln, Granulaten, oder durch Verkapselungen in z.B. polymeren Stoffen in bekannter Weise verarbeitet. Die Anwendungsverfahren wie Versprühen, Vernebeln, Verstäuben, Verstreuen, Bestreichen oder Giessen werden gleich wie die Art der Mittel den angestrebten Zielen und den gegebenen Verhältnissen entsprechend gewählt. Günstige Aufwandmengen des Wirkstoffgemischs liegen im allgemeinen bei 50g bis 2kg AS/ha, insbesondere bei 100g bis 1000g AS/ha, besonders bevorzugt bei 400g bis 1000g AS/ha. Für die Saatgutbehanlung sind die Aufwandmengen 0.5g-1000g, vorzugsweise 5g-100g AS pro 100 kg Saatgut.

Die Formulierungen werden in bekannter Weise hergestellt, z.B. durch inniges Ver mischen und/oder Vermahlen der Wirkstoffe mit Streckmitteln, wie z.B. mit Lösungs mitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Ether und Ester, wie Ethanol, Ethylenglykol, Ethylenglykolmonomethylether oder -ethylether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z.B. für Stäubemittel und dispergierbare Pulver, werden in der Regel natürliche Gesteinsmehl verwendet, wie Calcit, Talkum, Kaolin, Montmorillonit oder Attapulgit. Zur Verbesserung der physikalischen Eigenschaften können auch hoch disperse Kieselsäure oder hochdisperse saugfähige Polymerisate zugesetzt werden. Als gekörnte, adsorptive Granulatträger kommen poröse Typen wie z.B. Bimsstein, Ziegel bruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach Art der zu formulierenden Wirkstoffe der Formeln I und II nichtionogene, kation- und/oder anionaktive Tenside mit guten Emulgier-, Dispergier- und Netzeigenschaften in Betracht. Unter Tensiden sind auch Tensidgemische zu verstehen.

Besonders vorteilhafte, applikationsfördernde Zuschlagstoffe sind ferner natürliche oder synthetische Phospholipide aus der Reihe der Kephaline und Lecithine, wie z.B. Phosphatidylethanolamin, Phosphatidylserin, Phosphatidylglycerin, Lysolecithin.

Die agrochemischen Zubereitungen enthalten in der Regel 0,1 bis 99%, insbesondere 0,1 bis 95% Wirkstoffe der Formeln I und II, 99,9 bis 1%, insbesondere 99,9 bis 5% eines festen oder flüssigen Zusatzstoffes und 0 bis 25%, insbesondere 0,1 bis 25% eines Tensides.

Während als Handelsware eher konzentrierte Mittel bevorzugt werden, verwendet der Endverbraucher in der Regel verdünnte Mittel.

Die nachfolgenden Beispiele dienen der Illustration der Erfindung, wobei "Wirkstoff" ein Gemisch aus Verbindungl und Verbindung II in einem bestimmten Mischungs-Verhältnis bedeutet.

Formulierungsbeispiele

| Spritzpulver | a) | b) | c) |
|---|---|---|---|
| Wirkstoff [I:II = 1:3(a), 1:2(b), 1:1(c)] | 25 % | 50 % | 75 % |
| Na-Ligninsulfonat | 5 % | 5 % | - |
| Na-Laurylsulfat | 3 % | - | 5% |
| Na-Diisobutylnaphthalinsulfonat | - | 6 % | 10 % |
| Octylphenolpolyethylenglykolether (7-8 Mol Ethylenoxid) | - | 2 % | - |
| Hochdisperse Kieselsäure | 5 % | 10 % | 10 % |
| Kaolin | 62 % | 27% | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| Emulsions-Konzentrat | |
|---|---|
| Wirkstoff (I:IIB = 1:4) | 10 % |
| Octylphenolpolyethylenglykolether (4-5 Mol Ethylenoxid) | 3 % |
| Ca-Dodecylbenzolsulfonat | 3 % |
| Ricinusölpolyglykolether (35 Mol Ethylenoxid) | 4 % |
| Cyclohexanon | 30 % |
| Xylolgemisch | 50 % |

Aus diesem Konzentrat können durch Verdünnen mit Wasser Emulsionen jeder ge wünschten Verdünnung hergestellt werden, die sich im Pflanzenschutz, einsetzen lassen.

| Stäubemittel | a) | b) | c) |
|---|---|---|---|
| Wirkstoff [I:II = 1:4 (a); 1:5 (b) und 1:1 (c)] | 5 % | 6 % | 4 % |
| Talkum | 95 % | - | - |
| Kaolin | - | 94 % | - |
| Gesteinsmehl | - | - | 96 % |

Man erhält anwendungsfertige Stäubemittel, indem der Wirkstoff mit dem Träger vermischt und auf einer geeigneten Mühle vermahlen wird. Solche Pulver lassen sich auch zur Trockenbeize für Saatgut verwenden.

| Extruder Granulat | |
|---|---|
| Wirkstoff (I:II = 1:1,5) | 15 % |
| Na-Ligninsulfonat | 2 % |
| Carboxymethylcellulose | 1 % |
| Kaolin | 82 % |

Der Wirkstoff wird mit den Zusatzstoffen vermischt, vermahlen und mit Wasser ange feuchtet. Dieses Gemisch wird extrudiert und anschliessend im Luftstrom getrocknet.

| Umhüllungs-Granulat | |
|---|---|
| Wirkstoff (I:II = 3:5) | 8% |
| Polyethylenglykol (MG 200) | 3 % |
| Kaolin | 89 % |
| (MG = Molekulargewicht) | |

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

| Suspensions-Konzentrat | |
|---|---|
| Wirkstoff (I:IIB = 1:5) | 40 % |
| Propylenglykol | 10 % |
| Nonylphenolpolyethylenglykolether (15 Mol Et-oxid) | 6 % |
| Na-Ligninsulfonat | 10 % |
| Carboxymethylcellulose | 1 % |
| Silikonöl (in Form 75%ig. wässriger Emulsion) | 1 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Verdünnung hergestellt werden können. Mit solchen Verdünnungen kann man lebende Pflanzen sowie pflanzliches Vermehrungsgut durch Besprühen, Begiessen oder Eintauchen behandeln und vor Mikoorganismen-Befall schützen.

<u>Biologische Beispiele</u>

Ein synergistischer Effekt liegt dann vor, wenn die Wirkung der Wirkstoffkombination grösser ist als die Summe der Wirkungen der Einzelkomponenten.

Die zu erwartende Wirkung E für eine gegebene Wirkstoff-Kombination, z.B. zweier Fungizide, gehorcht der COLBY-Formel und kann wie folgt berechnet werden, (COLBY, S.R. "Calculating synergistic and antagonistic responses of herbicide combination". Weeds, Vol.15, Seiten 20-22; 1967):

ppm = Milligramm Wirkstoff (=WS) pro Liter Spritzbrühe

X = % Wirkung durch Wirkstoff I bei Anwendung von p ppm Wirkstoff

Y = % Wirkung durch Wirkstoff II bei Anwendung von q ppm Wirkstoff

E = die erwartete Wirkung der Wirkstoffe I+II bei Anwendung von p+q ppm Wirkstoff (additive Wirkung),

dann ist nach Colby:

$$E = X + Y - \frac{X \cdot Y}{100}$$

Wenn die tatsächlich beobachtete Wirkung (O) grösser ist als die erwartete (E), so ist die Kombination in ihrer Wirkung überadditiv, d.h. es liegt ein synergistischer Effekt vor.

O/E = Synergiefaktor (SF).

In den folgenden Beispielen wird der Befall der unbehandelten Pflanzen gleich 100% gesetzt, was einer Wirkung von 0% entspricht.

Beispiele 1/Tab. 1: Wirkung gegen Erysiphe graminis auf Weizen:

7 Tage alte Weizenpflanzen werden mit einer aus dem formulierten Wirkstoff bzw. Wirkstoffkombination hergestellten Spritzbrühe tropfnass besprüht. Nach 1 Tag werden die Pflanzen mit Sporen von Erysiphe graminis inokuliert und bei 20°C und 50-80% Luftfeuchtigkeit im Gewächshaus inkubiert. Nach 10 Tagen wird der Pilzbefall beurteilt. Dabei werden folgende Resultate erzielt:

Beispiel 1/Tab.1: Wirkstoffgemisch: IC=Metconazol, IIB=Cyprodinil

| Vers. Nr. | mg WS pro WS IC | Liter WS IIB | I:II | % Wirkung | | |
|---|---|---|---|---|---|---|
| | | | | gefunden O | berechnet E | SF O/E |
| 0 | -- | -- | | 0 (Kontrolle) | | |
| 1 | 0.6 | - | | 32 | | |
| 2 | 2 | | | 65 | | |
| 3 | 6 | | | 85 | | |
| 4 | - | 2 | | 8 | | |
| 5 | - | 20 | | 31 | | |
| 6 | 0.6 | 2 | 1:3 | 59 | 37 | 1.6 |
| 7 | 0.6 | 20 | 1:30 | 74 | 53 | 1.4 |
| 8 | 2 | 2 | 1:1 | 80 | 68 | 1.2 |
| 9 | 2 | 20 | 1:10 | 84 | 76 | 1.1 |
| 10 | 6 | 2 | 3:1 | 92 | 86 | 1.1 |

**Patentansprüche**

1. Pflanzenmikrobizides Mittel enthaltend mindestens zwei Wirkstoff-Komponenten in einer synergistisch wirkenden Menge, zusammen mit einem geeigneten Trägermaterial, **dadurch gekennzeichnet, dass** die Komponente I (IC) 5-(4-Chlorbenzyl)-2,2-dimethyl-1-(1 H-1,2,4-triazol-1-ylmethyl)-cyclopentanol ("Metconazol");
oder jeweils eines ihrer Salze oder Metallkomplexe;
und dass die Komponente II
(IIB) 4-Cyclopropyl-6-methyl-N-phenyl-2-pyrimidinamin("Cyprodinil") oder jeweils eines ihrer Salze oder Metallkomplexe ist.

2. Mittel gemäss Anspruch 1, **dadurch gekennzeichnet, dass** das Gewichtsverhältnis I:II = 1:10 bis 10:1 beträgt.

3. Mittel gemäss Anspruch 1, **dadurch gekennzeichnet, dass** das Gewichtsverhältnis I:II = 1:6 bis 6:1 beträgt.

4. Verwendung eines Mittels gemäss Anspruch 1 zur Bekämpfung und Verhütung von Pilzbefall auf Pflanzen.

5. Verfahren zur Bekämpfung und Verhütung von Pilzen auf Pflanzen, **dadurch gekennzeichnet, dass** man in beliebiger Reihenfolge oder gleichzeitig eine durch Pilze befallene oder gefährdete Stelle mit der Komponente I, die Komponente I die Verbindung IC ("Metconazol") ist, und der Komponente II gemäss Anspruch 1 behandelt.

6. Verfahren gemäss Anspruch 5, **dadurch gekennzeichnet, dass** Getreide behandelt wird.

**7.** Verfahren gemäss Anspruch 5, **dadurch gekennzeichnet, dass** Saatgut behandelt wird.

**8.** Pflanzliches Vermehrungsgut, das gemäss Anspruch 7 behandelt wurde.

**Claims**

**1.** A plant-microbicidal composition comprising at least two active ingredient components in a synergistically effective amount, together with a suitable carrier, wherein component I is (IC) 5-(4-chlorobenzyl)-2,2-dimethyl-1-(1H-1,2,4-triazol-1-ylmethyl)-cyclopentanol ("metconazole");
or one of the salts or metal complexes thereof;
and component II is
(IIB) 4-cyclopropyl-6-methyl-N-phenyl-2-pyrimidineamine ("cyprodinil") or one of the salts or metal complexes thereof.

**2.** A composition according to claim 1 wherein the ratio by weight I:II is 1:10 to 10:1.

**3.** A composition according to claim 1 wherein the ratio by weight I:II is 1:6 to 6:1.

**4.** The use of a composition according to claim 1 in the control and prevention of fungal infestation on plants.

**5.** A method of controlling and preventing the occurrence of fungi on plants, wherein a site infested by or threatened with infestation by fungi is treated, in any desired sequence or simultaneously, with component I, component I is compound IC ("metconazole"), and component II according to claim 1.

**6.** A method according to claim 5 wherein cereal is treated.

**7.** A method according to claim 5 wherein seed is treated.

**8.** Plant propagation material which has been treated according to claim 7.

**Revendications**

**1.** Produit microbicide sur les végétaux, contenant au moins deux composants matières actives en une quantité à effet synergique, en même temps qu'un matériau support approprié, **caractérisé en ce que** le composant I est
(IC) la 5-(4-chlorobenzyl)-2,2-diméthyl-1-(IH-1,2,4-triazole-1-ylméthyl)-cyclopentanol ("metconazol") ou l'un de ses sels ou complexes métalliques ;
et que le composant II est
(IIB) la 4-cyclopropyl-6-méthyl-N-phényl-2-pyrimidinamine ("cyprodinil") ou l'un de ses sels ou complexes métalliques.

**2.** Produit selon la revendication 1, **caractérisé en ce que** le rapport en poids I:II est de 1:10 à 10:1.

**3.** Produit selon la revendication 1, **caractérisé en ce que** le rapport en poids I:II est de 1:6 à 6:1.

**4.** Utilisation d'un produit selon la revendication 1 pour lutter contre les infestations fongiques sur les plantes et protéger les plantes d'une infestation fongique.

**5.** Procédé pour lutter contre les champignons sur les plantes et pour protéger ces dernières contre les champignons, **caractérisé en ce qu'**on traite, dans un ordre quelconque ou simultanément, un site infesté par des champignons ou risquant de l'être, avec le composant I, qui est le composé IC ("metconazol") et le composant II selon la revendication 1.

**6.** Procédé selon la revendication 5, **caractérisé en ce que** le traitement porte sur des céréales.

**7.** Procédé selon la revendication 5, **caractérisé en ce que** le traitement porte sur des semences.

8. Produit pour la multiplication des plantes, qui a été traité selon la revendication 7.